# EUROPÄISCHE PATENTSCHRIFT

(11) **EP 3 244 092 B1**
(45) Veröffentlichungstag und Bekanntmachung des Hinweises auf die Patenterteilung: **02.03.2022**
(21) Anmeldenummer: 17401048.8
(22) Anmeldetag: 02.05.2017
(51) Int. Cl.: F16F 15/134, F16F 15/14

(54) **DREHSCHWINGUNGSDÄMPFER, INSBESONDERE FÜR EINEN DREHMOMENTWANDLER UND DREHMOMENTWANDLER MIT DIESEM**
TORSIONAL VIBRATION DAMPER, IN PARTICULAR FOR A TORQUE CONVERTER, AND TORQUE CONVERTER WITH SAME
AMORTISSEUR DE VIBRATIONS TORSIONNELLES, EN PARTICULIER POUR UN CONVERTISSEUR DE COUPLE ET CONVERTISSEUR DE COUPLE LE COMPRENANT

(30) Priorität: 13.05.2016 DE 102016208261
(43) Veröffentlichungstag der Anmeldung: 15.11.2017
(73) Patentinhaber: Schaeffler Technologies AG & Co. KG, 91074 Herzogenaurach (DE)
(72) Erfinder: Maienschein, Stephan, 76534 Baden-Baden (DE)

(56) Entgegenhaltungen:
- WO-A2-2015/185054
- DE-A1-102010 014 674
- DE-A1-102011 013 483
- DE-A1-102011 017 651
- DE-A1-102014 208 158
- DE-B4-102011 013 483
- DE-B4-102011 017 651

## Beschreibung

Die Erfindung betrifft einen Drehschwingungsdämpfer, gemäß dem Oberbegriff des Anspruchs 1.

Gattungsgemäße Drehschwingungsdämpfer dienen der Drehschwingungsisolation in Antriebssträngen von Kraftfahrzeugen mit einer drehschwingungsbehafteten Brennkraftmaschine. Die Drehschwingungsdämpfer können direkt mit der Kurbelwelle der Brennkraftmaschine, beispielsweise als Zweimassenschwungräder ausgebildet oder in Einmassenschwungräder, Kupplungsscheiben von Reibungskupplungen, Doppelkupplungen, Drehmomentwandler oder dergleichen integriert sein. Hierzu sind beispielsweise aus der DE 10 2014 208158 A1, die als nächstliegender Stand der Technik betrachtet wird, sowie aus den

DE 10 2010 014 674 A1, DE 10 2010 035 124 A1, DE 10 2009 052 202 A1 und EP 2 711 576 A1 Drehschwingungsdämpfer bekannt, die ein Eingangsteil und ein Ausgangsteil aufweisen, wobei zwischen diesen eine mehrstufige Federeinrichtung mit zwei Dämpferstufen vorgesehen ist. Die Federelemente der Federeinrichtung sind dabei im Wesentlichen auf demselben Wirkradius beziehungsweise Durchmesser angeordnet.

Aufgabe der Erfindung ist die Weiterbildung eines gattungsgemäßen Drehschwingungsdämpfers und eines hydrodynamischen Drehmomentwandlers mit diesem. Insbesondere ist Aufgabe der Erfindung, einen Drehschwingungsdämpfer und einen Drehmomentwandler mit diesem vorzuschlagen, bei dem die Kopplung der Federelemente im unbelasteten Zustand oder im Niedriglastbereich in verbesserter Weise definiert ist.

Die Aufgabe wird durch den Gegenstand des Anspruchs 1 gelöst. Die von dem Anspruch 1 abhängigen Ansprüche geben vorteilhafte Ausführungsformen des Gegenstands des Anspruchs 1 wieder.

Der vorgeschlagene Drehschwingungsdämpfer dient der Drehschwingungsisolation von Drehschwingungen in einem Antriebsstrang eines Kraftfahrzeugs insbesondere zur Drehschwingungsisolation von Drehschwingungen einer Brennkraftmaschine und ist insbesondere für einen hydrodynamischen Drehmomentwandler vorgesehen. Der Drehschwingungsdämpfer enthält zwei um eine Drehachse verdrehbar und relativ gegeneinander um die Drehachse verdrehbare Dämpferteile, nämlich ein Eingangsteil, ein Ausgangsteil und einen im Drehmomentfluss zwischen diesen wirksam angeordneten Zwischenflansch. Zur Ausbildung einer drehschwingungsdämpfenden Wirkung sind zwischen Eingangsteil und Zwischenflansch eine erste Federeinrichtung und zwischen Zwischenflansch und Ausgangsteil eine zweite Federeinrichtung mit im Wesentlichen auf demselben Durchmesser beziehungsweise Wirkradius erste und zweite Federelemente, beispielsweise gerade und/oder auf ihren Einsatzdurchmesser vorgebogene Schraubendruckfedern, vorgesehen. Die Federelemente der beiden Federeinrichtungen können bezüglich ihrer Materialeigenschaften und/oder Geometrie gleich oder unterschiedlich ausgebildet sein. Beispielsweise können die Federelemente gerade oder auf ihren Einsatzdurchmesser vorgebogen sein. Federelemente einer Federeinrichtung können ineinander geschachtelt sein. Die Beaufschlagung der Federelemente kann radial oder zu einer radialen Fläche winkelversetzt sein. Die in den einzelnen Federeinrichtungen vorgesehenen Schraubendruckfedern können beispielsweise bezüglich ihrer Länge, ihrem Außendurchmesser, ihres Drahtdurchmessers, ihrer Windungssteigung und/oder Anzahl der Windungen unterschiedlich ausgebildet sein.

Um die Wirkung der Federelemente zu definieren und in Zusammenwirkung mit zumindest einem Drehschwingungstilger, beispielsweise einem Fliehkraftpendel zu verbessern, sind die Federelemente zumindest einer Federeinrichtung in von außen unbelastetem Zustand in Umfangsrichtung vorgespannt angeordnet. In bevorzugter Weise können die Federelemente beider Federeinrichtungen gegeneinander und jeweils zwischen Eingangs- beziehungsweise Ausgangsteil gegen den Zwischenflansch vorgespannt sein, so dass keine weiteren konstruktiven Maßnahmen zu treffen sind. In speziellen Ausführungsformen können lediglich die Federelemente einer einzigen Federeinrichtung, nämlich die zwischen Eingangsteil und Zwischenflansch oder die zwischen Ausgangsteil und Zwischenflansch angeordneten Federelemente vorgespannt sein, wobei zur Verhinderung einer Nachführung des Zwischenflanschs und Abbau der Vorspannung der Zwischenflansch durch entsprechende Anschläge gesperrt sein kann. Gemäß der Erfindung ist ein Verdrehspiel, also ein Umfangsspiel zwischen Eingangsteil und Ausgangsteil in eine der beiden oder in beide Drehmomentrichtungen vorgesehen, so dass die die Wirkung der vorgespannten Federelemente erst nach Aufbrauch des Verdrehspiels einsetzt, also eine Vorspannung nach Aufbrauch eines Umfangsspiels wirksam ist.

Die Vorspannung kann hart, das heißt durch direkte Vorspannung der Federelemente zwischen Eingangs- beziehungsweise Ausgangsteil und Zwischenflansch ausgebildet sein. Alternativ kann eine Vorspannung mittels einer Vorschaltung einer Elastizität, beispielsweise eines weniger steif ausgebildeten Federelements als die vorgespannten Federelemente zwischen Eingangs- beziehungsweise Ausgangsteil und Zwischenflansch geschaltet sein, so dass eine weiche Vorspannung der Federelemente bewirkt werden kann.

Mit anderen Worten kann eine Verspannung der jeweils in Reihe angeordneten Federelemente vorgesehen sein, so dass im lastlosen wie lastfreien Zustand des Drehschwingungsdämpfers der Zwischenflansch spielfrei und mit einer definierten Vorlast wie Vorspannung beaufschlagt wird. Diese Maßnahme ist grundsätzlich unabhängig davon wirksam, an welchem Dämpferelement beziehungsweise welchen Dämpferelementen, nämlich Eingangsteil, Zwischenflansch oder Ausgangsteil gegebenenfalls ein oder mehrere Drehschwingungstilger, insbesondere Fliehkraftpendel angeordnet sind. Ebenso ist die Maßnahme einer Vorspannung unabhängig davon, ob die Abstützung der in Reihe geschalteten und verspannten Federelemente zwischen Eingangs- oder Ausgangsteil und Zwischenflansch oder zwischen Eingangs- beziehungsweise Ausgangsteil und Zwischenflansch erfolgt.

Beispielsweise liegt eine vorgeschlagene Vorspannung vor, wenn mindestens eine Reihenfederanordnung des Drehschwingungsdämpfers den zwischen den Federelementen der Reihenfederanordnung angeordneten Zwischenflansch spielfrei anordnet und mit einer Mindestkraft beaufschlagt. Diese Mindestkraft kann auch als Vorspannmoment des Drehschwingungsdämpfers bezogen auf dessen Drehachse wirksam sein. Ein derartiges Vorspannmoment kann beispielsweise auf mindestens 0,2 Nm, bevorzugt mindestens 1 Nm, besonders bevorzugt mindestens auf 2,5 Nm eingestellt sein.

Gemäß einer vorteilhaften Ausführungsform des Drehschwingungsdämpfers kann bei vorgegebener Struktur, beispielsweise durch Ausbildung der Eingangsteile, der Ausgangsteile und/oder des Zwischenflanschs jeweils als Gleichteile ein Baukastensystem vorgeschlagen werden, wobei eine Abstimmung des Drehschwingungsdämpfers auf entsprechende Anwendungen ausschließlich mittels der Auslegung der Federelemente vorgesehen sein kann.

Der vorgeschlagene hydrodynamische Drehmomentwandler enthält eine zwischen einem Wandlereingangsteil, beispielsweise einem Wandlergehäuse und einem Wandlerausgangsteil, beispielsweise einer mit einer Getriebeeingangswelle eines Getriebes drehschlüssig verbundenen Nabe, angeordnete Wandlerüberbrückungskupplung, ein bevorzugt mit dem Wandlergehäuse verbundenes oder in dieses integriertes Pumpenrad und ein vom Pumpenrad mittels eines Wandlerfluids angetriebenes Turbinenrad sowie gegebenenfalls ein Leitrad. In das Wandlergehäuse ist der vorgeschlagene Drehschwingungsdämpfer integriert. Die Wandlerüberbrückungskupplung kann aus einer an dem Wandlergehäuse angeordneten Reibfläche und einer an einem druckverlagerbaren Kolben angeordneten komplementären Reibfläche ausgebildet sein. Hierbei überträgt der Kolben bei geschlossener Reibungskupplung das an dem Wandlergehäuse anstehende Drehmoment unter Zwischenschaltung des Drehschwingungsdämpfers auf das Wandlerausgangsteil. Alternativ kann die Wandlerüberbrückungskupplung als Lamellenkupplung ausgebildet sein, wobei ein eingangsseitiger Lamellenträger mit dem Wandlergehäuse und ein ausgangsseitiger Lamellenträger mit dem Drehschwingungsdämpfer verbunden sind.

Gemäß einer vorteilhaften Ausführungsform des Drehmomentwandlers können das Eingangsteil des Drehschwingungsdämpfers mit der Wandlerüberbrückungskupplung, beispielsweise dem Ausgangsteil der Wandlerüberbrückungskupplung, das Ausgangsteil des Drehschwingungsdämpfers mit dem Wandlerausgangsteil und der Zwischenflansch mit dem Turbinenrad verbunden sein. Das Eingangsteil der Wandlerüberbrückungskupplung kann beispielsweise mit dem Wandlergehäuse verbunden sein.

Gemäß einer vorteilhaften Ausführungsform des Drehmomentwandlers können das Eingangsteil des Drehschwingungsdämpfers mit der Wandlerüberbrückungskupplung und das Ausgangsteil des Drehschwingungsdämpfers und das Turbinenrad mit dem Wandlerausgangsteil verbunden sein.

Gemäß einer vorteilhaften Ausführungsform des Drehmomentwandlers kann an dem Eingangsteil, Ausgangsteil und/oder an dem Zwischenflansch zumindest ein Drehschwingungstilger angeordnet sein. Der zumindest eine Drehschwingungstilger kann als Fliehkraftpendel mit einem Pendelmassenträger und Pendelmassen ausgebildet sein, wobei die Pendelmassen an dem Pendelmassenträger entlang von Pendelbahnen im Fliehkraftfeld des um die Drehachse drehenden Drehschwingungsdämpfers oder Drehmomentwandlers mittels Pendellagern pendelfähig aufgenommen sind. Beispielsweise kann das Fliehkraftpendel einen Pendelmassenträger aufweisen, der einteilig aus zumindest einem Bauteil des Drehschwingungsdämpfers gebildet ist. Beispielsweise kann ein als Pendelflansch ausgebildetes Scheibenteil des Drehschwingungsdämpfers beidseitig Pendelmassen aufweisen. Alternativ können zwei axial beabstandete Scheibenteile des Drehschwingungsdämpfers den Pendelmassenträger bilden, wobei die Pendelmassen zwischen diesen mittels Pendellagern aufgenommen sind.

Der zumindest eine Drehschwingungstilger, insbesondere Fliehkraftpendel ist auf eine oder gegebenenfalls auf mehrere Schwingungsordnungen abgestimmt. Hierbei kann eine Schwingungsordnung auf die Schwingungsordnung einer Brennkraftmaschine im Betrieb mit voller Zylinderzahl und eine zweite Schwingungsordnung auf die Schwingungsordnung der Brennkraftmaschine bei einem Betrieb mit einem Teil der Zylinder abgestimmt sein. Die Pendelmassen können an dem Pendelmassenträger mittels der Pendellager und der an diesen entsprechenden ausgebildeten Laufbahnen zur Einstellung einer vorgegebenen Pendelbahn entsprechend eines bifilar in paralleler oder trapezförmiger Anordnung der Pendelfäden eines Pendels aufgehängt sein. Die Pendelmassen können miteinander starr oder elastisch gekoppelt sein. Beispielsweise können in Umfangsrichtung benachbarte Pendelmassen mittels Federelementen gekoppelt sein.

Gemäß einer vorteilhaften Ausführungsform des Drehschwingungsdämpfers oder des Drehmomentwandlers kann an dem Eingangsteil, Ausgangsteil und/oder Zwischenflansch zumindest ein Zusatzmassenelement angeordnet sein.

Die Erfindung wird anhand der in den Figuren 1 bis 11 dargestellten Ausführungsbeispiele näher erläutert. Dabei zeigen:
- Figur 1: einen Drehmomentwandler mit Drehschwingungsdämpfer in schematischer Darstellung,
- Figur 2: den oberen Teil des Drehmomentwandlers der Figur 1 in konstruktiver Ausführung in Schnittdarstellung,
- Figur 3: den Drehschwingungsdämpfer der Figur 2 in Ansicht,
- Figur 4: einen gegenüber dem Drehmomentwandler der Figuren 1 bis 3 abgewandelten Drehmomentwandler in schematischer Darstellung,
- Figur 5: den oberen Teil des konstruktiv ausgestalteten Drehmomentwandlers der Figur 4 in Schnittdarstellung,
- Figur 6: einen gegenüber den Drehmomentwandlern der Figuren 1 bis 5 abgewandelten Drehmomentwandler in schematischer Darstellung,
- Figur 7: den oberen Teil des konstruktiv ausgestalteten Drehmomentwandlers der Figur 6 in Schnittdarstellung,
- Figur 8: eine Kennlinie eines nicht erfindungsgemäßen Drehschwingungsdämpfers mit harter Vorspannung ohne Verdrehspiel,
- Figur 9: eine Kennlinie eines Drehschwingungsdämpfers mit harter Vorspannung mit Verdrehspiel,
- Figur 10: eine Kennlinie eines Drehschwingungsdämpfers mit weicher Vorspannung mit Verdrehspiel
- und Figur 11: eine Kennlinie eines nicht erfindungsgemäßen Drehschwingungsdämpfers mit weicher Vorspannung ohne Verdrehspiel.

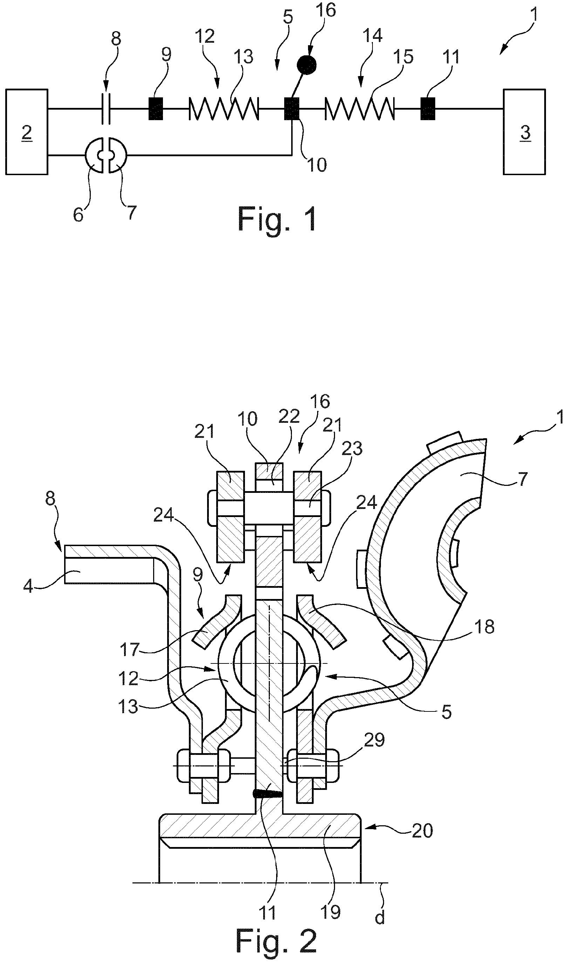

Die Figur 1 zeigt den in einen Antriebsstrang mit der Brennkraftmaschine 2 und dem Getriebe 3 integrierten hydrodynamischen Drehmomentwandler 1, von dem lediglich der Drehschwingungsdämpfer 5, das Pumpenrad 6, das Turbinenrad 7 und die Wandlerüberbrückungskupplung 8 dargestellt sind.

Der Drehschwingungsdämpfer 5 enthält das Eingangsteil 9, den Zwischenflansch 10 und das Ausgangsteil 11. Zwischen dem Eingangsteil 9 und dem Zwischenflansch 10 ist die erste Federeinrichtung 12 mit den ersten Federelementen 13, beispielsweise Schraubendruckfedern, angeordnet. Zwischen dem Zwischenflansch 10 und dem Ausgangsteil 11 ist die zweite Federeinrichtung 14 mit den zweiten Federelementen 15 angeordnet. Mittels identischer oder unterschiedlicher Federelemente 13, 15 mit unterschiedlichen Abmessungen, Drahtstärke, Windungszahl, Windungssteigung, Materialeigenschaften oder dergleichen im Wesentlichen bezogen auf deren Verhalten lassen sich ähnliche Federeinrichtungen 12, 14 erzielen, so dass ein einstufiges oder in geringem Maße zweistufiges Verhalten des Drehschwingungsdämpfers 5 über den Verdrehwinkel von Eingangsteil 9 und Ausgangsteil 11 vorgesehen werden kann. Die Federelemente 13 und/oder die Federelemente 15 sind gegen den Zwischenflansch 10 vorgespannt angeordnet.

In dem gezeigten Ausführungsbeispiel ist das Eingangsteil 9 des Drehschwingungsdämpfers 5 mit der Wandlerüberbrückungskupplung 8, der Zwischenflansch 10 mit dem Turbinenrad 7 und das Ausgangsteil 11 mit der Getriebeeingangswelle des Getriebes 3 verschaltet. Bei geöffneter Wandlerüberbrückungskupplung 8 wird das Drehmoment der Brennkraftmaschine 2 über den Drehmomentwandler 1, das heißt über das Pumpenrad 6 und das Turbinenrad 7 auf den Zwischenflansch 10 und von dort über die zweite Federeinrichtung 14 auf das Ausgangsteil 11, das zugleich als Wandlerausgangsteil des Drehmomentwandlers 1 dient, übertragen.

An dem Zwischenflansch 10 ist das Fliehkraftpendel 16 angeordnet.

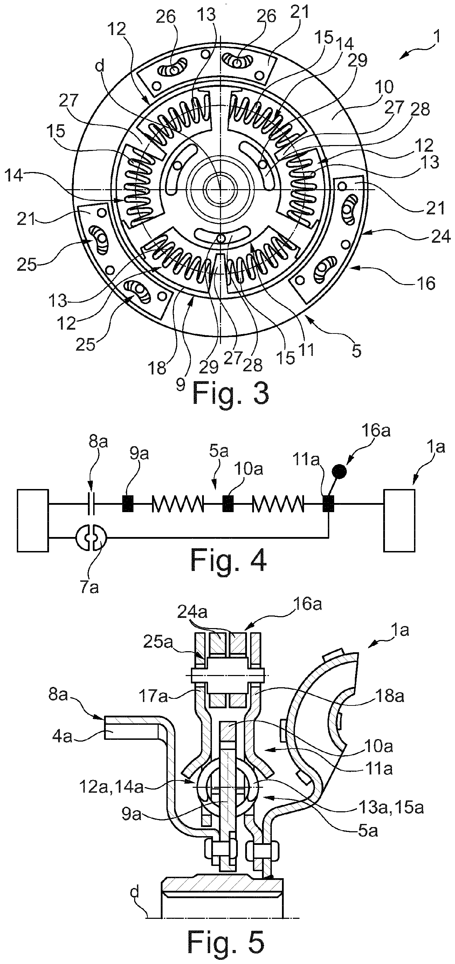

Die Figuren 2 und 3 zeigen in der Zusammenschau den oberen Teil des um die Drehachse d angeordneten, konstruktiv ausgearbeiteten Drehmomentwandlers 1 im Schnitt (Figur 2) und eine Ansicht des Drehmomentwandlers 1 der Figur 2 bei abgenommenem Seitenteil 17 des Eingangsteils 9 des Drehschwingungsdämpfers 5 (Figur 3).

Das Eingangsteil 9 des Drehschwingungsdämpfers 5 ist aus den beiden miteinander axial beabstandet verbundenen Seitenteilen 17, 18 gebildet. Jeweils ein Seitenteil 17, 18 ist mit dem ausgangsseitigen Lamellenträger 4 der als Lamellenkupplung ausgebildeten Wandlerüberbrückungskupplung 8 und mit dem Turbinenrad 7 verbunden - wie hier gezeigt vernietet.

Das Ausgangsteil 11 ist fest beziehungsweise drehschlüssig mit der Nabe 19, die als Wandlerausgangsteil 20 des Drehmomentwandlers 1 dient und mit einer nicht dargestellten Getriebeeingangswelle drehschlüssig verbunden ist, verbunden, beispielsweise verschweißt.

Axial auf derselben Höhe und radial außerhalb des Ausgangsteils 11 ist der ringförmige Zwischenflansch 10 angeordnet. Der Zwischenflansch 10 nimmt das Fliehkraftpendel 16 auf, wobei der Zwischenflansch 10 als Pendelmassenträger dient und beidseitig die über den Umfang verteilt angeordneten Pendelmassenteile 21 aufnimmt. Dabei bilden jeweils axial gegenüberliegende Pendelmassenteile 21 mittels der die Ausnehmungen 22 des Zwischenflanschs 10 durchgreifender Abstandsbolzen 23 eine Pendelmasse 24. Die Pendelmassen 24 sind mittels jeweils zweier in Umfangsrichtung beabstandeter Pendellager 25, die durch Ausnehmungen mit Laufbahnen in dem Zwischenflansch 10 und in den Pendelmassenteilen 21 gebildet sind, wobei auf den Laufbahnen jeweils eine Pendelrolle 26 abwälzt, gebildet. Durch entsprechende Ausbildung der Laufbahnen werden die Pendelbahnen der Pendelmassen 24 gegenüber dem Zwischenflansch 10 vorgegeben.

Die Federelemente 13 der ersten Federeinrichtung 12 werden von den Seitenteilen 17, 18 und den nach innen erweiterten Nasen 27 des Zwischenflanschs 10 beaufschlagt. Die Federelemente 15 werden von dem Ausgangsteil 11 und den Nasen 27 beaufschlagt. Die Seitenteile 17, 18 sind mittels der in den Langlöchern 28 geführten Abstandsbolzen 29 miteinander verbunden.

Die Figur 4 zeigt den gegenüber dem Drehmomentwandler 1 der Figur 1 abgeänderten Drehmomentwandler 1a in derselben schematischen Darstellung. Im Unterschied zu dem Drehmomentwandler 1 ist der Drehschwingungsdämpfer 5a des Drehmomentwandlers 1a unterschiedlich geschaltet. Das Turbinenrad 7a ist hierbei mit dem Ausgangsteil 11a des Drehschwingungsdämpfers 5a verbunden. Das Eingangsteil 9a ist mit der Wandlerüberbrückungskupplung 8a verbunden. Der Zwischenflansch 10a ist schwimmend angeordnet. Das Fliehkraftpendel 16a ist dem Ausgangsteil 11a zugeordnet.

Die Figur 5 zeigt den oberen Teil einer konstruktiven Ausbildung des um die Drehachse d angeordneten Drehmomentwandlers 1a der Figur 4 in Schnittdarstellung. Das Eingangsteil 9a des Drehschwingungsdämpfers 5a ist flanschartig ausgebildet und radial innen mit dem Lamellenträger 4a der Wandlerüberbrückungskupplung 8a verbunden wie vernietet. Das Ausgangsteil 11a ist aus den beiden axial beabstandet miteinander verbundenen wie beispielsweise mittels Abstandsbolzen vernieteten Seitenteilen 17a, 18a gebildet. Hierbei bilden die beiden Seitenteile 17a, 18a den Pendelmassenträger des Fliehkraftpendels 16a, dessen Pendelmassen 24a mittels der Pendellager 25a axial zwischen den Seitenteilen 17a, 18a aufgenommen sind.

Der Zwischenflansch 10a ist radial außerhalb des Eingangsteils 9a schwimmend angeordnet und beaufschlagt alle Federelemente 13a, 15a der Federeinrichtungen 12a, 14a, während das Eingangsteil 9a lediglich die Federelemente 13a und das Ausgangsteil 11a lediglich die Federelemente 15a beaufschlagt.

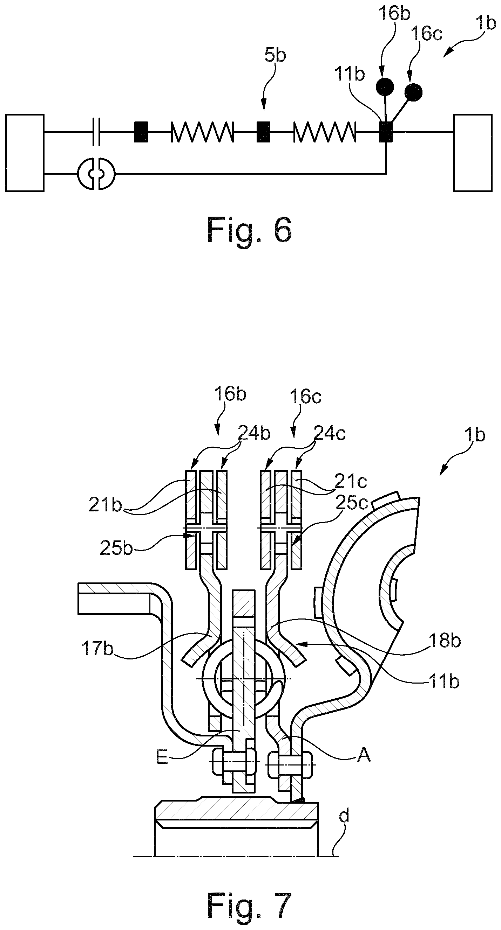

Die Figur 6 zeigt den gegenüber dem Drehmomentwandler 1a der Figur 4 leicht abgeänderten Drehmomentwandler 1b in derselben schematischen Darstellung. Im Unterschied zu dem Drehmomentwandler 1a sind an dem Ausgangsteil 11b des Drehschwingungsdämpfers 5b des Drehmomentwandlers 1b zwei Fliehkraftpendel 16b, 16c angeordnet.

Die Figur 7 zeigt den oberen Teil einer konstruktiven Ausbildung des um die Drehachse d angeordneten Drehmomentwandlers 1b der Figur 6 in Schnittdarstellung. Das Ausgangsteil 11b ist aus den beiden axial beabstandet miteinander verbundenen wie beispielsweise mittels Abstandsbolzen vernieteten Seitenteilen 17b, 18b gebildet. Hierbei bilden die beiden Seitenteile 17b, 18b jeweils einen Pendelmassenträger der Fliehkraftpendel 16b, 16c. Die Pendelmassen 24b, 24c sind entsprechend den Pendelmassen 24 der Figur 2 aus den Pendelmassenteilen 21b, 21c gebildet und mittels der Pendellager 25b, 25c an den Seitenteilen 17b, 18b pendelfähig aufgenommen. Je nach Ausführung können die Fliehkraftpendel 16b, 16c auf dieselbe oder unterschiedliche Schwingungsordnung ausgelegt sein.

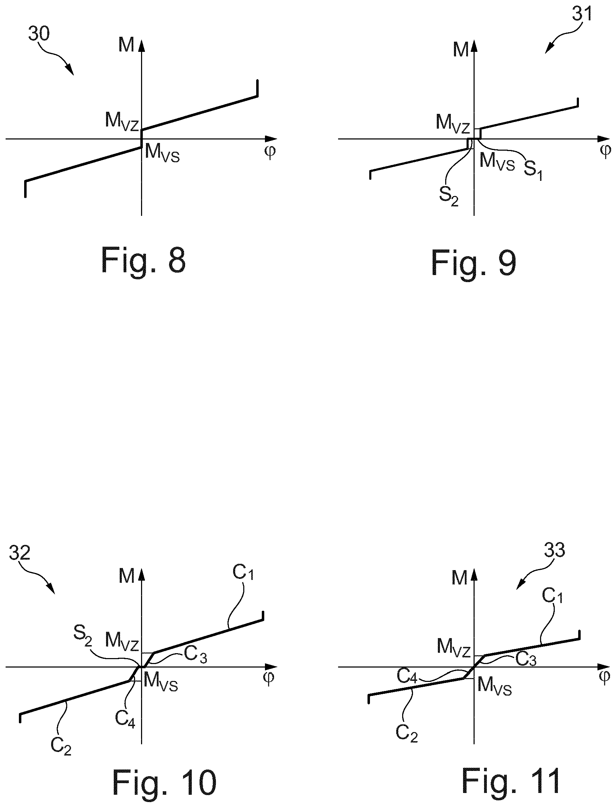

Die Kennlinie 30 der Figur 8 zeigt das Moment M eines aus einem lastfreien Zustand in Zugrichtung (rechter Abszissenast) und Schubrichtung (linker Abszissenast) über den Verdrehwinkel ϕ eines vorgeschlagenen Drehschwingungsdämpfers. Hierbei sind die für die Kennlinie 30 verantwortlichen Federelemente jeweils zwischen dem Eingangsteil beziehungsweise dem Ausgangsteil und dem Zwischenflansch vorgespannt, so dass diese im unbelasteten Zustand mit einer vorgegebenen Federkraft an dem Zwischenflansch anliegen und bei Verdrehung von Eingangsteil und Ausgangsteil gegeneinander abhängig von der Einleitung des Moments M das Vorspannmoment Mvz in Zugrichtung beziehungsweise das Vorspannmoment Mvs in Schubrichtung ausbilden. In dem gezeigten Ausführungsbeispiel sind dabei die Vorspannmomente Mvz, Mvs dem Betrage nach gleich, da die Federelemente mit gleicher Federkraft gegen den Zwischenflansch vorgespannt sind. Die Vorspannung erfolgt dabei spielfrei.

Im Unterschied zu der Kennlinie 30 der Figur 8 zeigt die in der Darstellung der Figur 9 gezeigte Kennlinie 31 ein über den Verdrehwinkel ϕ verzögertes Einsetzen der Vorspannmomente Mvz, Mvs. Hierzu ist zwischen den Federelementen und dem Zwischenflansch ein Verdrehspiel s₁, s₂ eingestellt. Die Vorspannung der Federelemente zur Einstellung des Verdrehspiels erfolgt beispielsweise durch Anschläge für die Federelemente an dem Eingangs- beziehungsweise Ausgangsteil. Alternativ kann das Verdrehspiel zwischen Eingangs- beziehungsweise Ausgangsteil und den Federelementen vorgesehen sein, wobei die Einstellung des Verdrehspiels durch Vorspannung der Federelemente gegen den Zwischenflansch vorgesehen ist. In dem gezeigten Ausführungsbeispiel ist das Verdrehspiel s₁ in Zugrichtung gleich groß wie das Verdrehspiel s₂ in Schubrichtung ausgebildet. Es versteht sich, dass die Verdrehspiele s₁, s₂ unterschiedlich ausgebildet sein können.

Die Figur 10 zeigt die Kennlinie 32, die in unbelastetem Zustand das Verdrehspiel s₂ in Umfangsrichtung aufweist und in Zugrichtung kein Verdrehspiel aufweist. Die Federelemente mit den Steifigkeiten C₁, C₂ in Zug- beziehungsweise Schubrichtung sind gegenüber dem Zwischenflansch mittels Elastizitäten, beispielsweise in Reihe zu den Federelementen geschalteter, die Vorspannung bewirkender Federelemente weich vorgespannt. Hierzu weisen die Steifigkeiten der zusätzlichen Elastizitäten Steifigkeiten C₃, C₄ in Schub- und Zugrichtung auf, die größer als die Steifigkeiten C₁, C₂ der Federelemente sind.

Die Figur 11 zeigt die im Wesentlichen der Kennlinie 32 der Figur 10 entsprechende Kennlinie 33 mit Federelementen mit den Steifigkeiten C₁, C₂ in Zug- und Schubrichtung, wobei diesen in Reihe spielfrei zur weichen Vorspannung bis zu den Vorspannmomenten Mvz, Mvs Elastizitäten mit in Zug- und Schubrichtung größeren Steifigkeiten C₃, C₄ zugeordnet sind.

### Bezuaszeichenliste

- 1: Drehmomentwandler
- 1a: Drehmomentwandler
- 1b: Drehmomentwandler
- 2: Brennkraftmaschine
- 3: Getriebe
- 4: Lamellenträger
- 4a: Lamellenträger
- 5: Drehschwingungsdämpfer
- 5a: Drehschwingungsdämpfer
- 5b: Drehschwingungsdämpfer
- 6: Pumpenrad
- 7: Turbinenrad
- 7a: Turbinenrad
- 8: Wandlerüberbrückungskupplung
- 8a: Wandlerüberbrückungskupplung
- 9: Eingangsteil
- 9a: Eingangsteil
- 10: Zwischenflansch
- 10a: Zwischenflansch
- 11: Ausgangsteil
- 11a: Ausgangsteil
- 11b: Ausgangsteil
- 12: Federeinrichtung
- 12a: Federeinrichtung
- 13: Federelement
- 13a: Federelement
- 14: Federeinrichtung
- 14a: Federeinrichtung
- 15: Federelement
- 15a: Federelement
- 16: Fliehkraftpendel
- 16a: Fliehkraftpendel
- 16b: Fliehkraftpendel
- 16c: Fliehkraftpendel
- 17: Seitenteil
- 17a: Seitenteil
- 17b: Seitenteil
- 18: Seitenteil
- 18a: Seitenteil
- 18b: Seitenteil
- 19: Nabe
- 20: Wandlerausgangsteil
- 21: Pendelmassenteil
- 21b: Pendelmassenteil
- 21c: Pendelmassenteil
- 22: Ausnehmung
- 23: Abstandsbolzen
- 24: Pendelmasse
- 24a: Pendelmasse
- 24b: Pendelmasse
- 24c: Pendelmasse
- 25: Pendellager
- 25a: Pendellager
- 25b: Pendellager
- 25c: Pendellager
- 26: Pendelrolle
- 27: Nase
- 28: Langloch
- 29: Abstandsbolzen
- 30: Kennlinie
- 31: Kennlinie
- 32: Kennlinie
- 33: Kennlinie
- C₁: Steifigkeit
- C₂: Steifigkeit
- C₃: Steifigkeit
- C₄: Steifigkeit
- d: Drehachse
- M: Moment
- Mvs: Vorspannmoment Schubrichtung
- Mvz: Vorspannmoment Zugrichtung
- s₁: Verdrehspiel
- s₂: Verdrehspiel
- ϕ: Verdrehwinkel

## Patentansprüche

1. Drehschwingungsdämpfer (5, 5a, 5b), insbesondere für einen hydrodynamischen Drehmomentwandler (1, 1a, 1b), mit um eine Drehachse (d) verdrehbar und relativ gegeneinander um die Drehachse (d) verdrehbaren Dämpferteilen, nämlich einem Eingangsteil (9, 9a), einem Ausgangsteil (11, 11a, 11b) und einem im Drehmomentfluss zwischen diesen wirksam angeordneten Zwischenflansch (10, 10a), wobei zwischen Eingangsteil (9, 9a) und Zwischenflansch (10, 10a) eine erste Federeinrichtung (12, 12a) und zwischen Zwischenflansch (10, 10a) und Ausgangsteil (11, 11a, 11b) eine zweite Federeinrichtung (14) mit im Wesentlichen auf demselben Wirkradius angeordneten ersten und zweiten Federelementen (13, 13a, 15, 15a) vorgesehen ist, wobei die Federelemente (13, 13a, 15, 15a) zumindest einer Federeinrichtung (12, 12a, 14) in von außen unbelastetem Zustand in Umfangsrichtung vorgespannt angeordnet sind, **dadurch gekennzeichnet, dass** eine Vorspannung nach Aufbrauch eines Umfangsspiels wirksam ist.

2. Drehschwingungsdämpfer (5, 5a, 5b) nach Anspruch 1, **dadurch gekennzeichnet, dass** eine Vorspannung mittels einer Vorschaltung einer in Umfangsrichtung wirksamen Elastizität in Reihe zu den Federelementen (13, 13a, 15, 15a) vorgesehen ist.

3. Hydrodynamischer Drehmomentwandler (1, 1a, 1b) zumindest enthaltend den Drehschwingungsdämpfer (5, 5a, 5b) gemäß der Ansprüche 1 bis 2, eine zwischen einem Wandlereingangsteil und einem Wandlerausgangsteil (20) angeordnete Wandlerüberbrückungskupplung (8, 8a), ein Pumpenrad (6) und ein Turbinenrad (7, 7a).

4. Hydrodynamischer Drehmomentwandler (1) nach Anspruch 3, **dadurch gekennzeichnet, dass** das Eingangsteil (9) des Drehschwingungsdämpfers (5) mit der Wandlerüberbrückungskupplung (8), das Ausgangsteil (11) des Drehschwingungsdämpfers (5) mit dem Wandlerausgangsteil und der Zwischenflansch (10) mit dem Turbinenrad (7) verbunden sind.

5. Hydrodynamischer Drehmomentwandler (1a, 1b) nach Anspruch 3, **dadurch gekennzeichnet, dass** das Eingangsteil (9a) des Drehschwingungsdämpfers (5a, 5b) mit der Wandlerüberbrückungskupplung (8a) und das Ausgangsteil (11a, 11b) des Drehschwingungsdämpfers (5a, 5b) und das Turbinenrad (7a) mit dem Wandlerausgangsteil verbunden sind.

6. Hydrodynamischer Drehmomentwandler (1, 1a, 1b) nach einem der Ansprüche 3 bis 5, **dadurch gekennzeichnet, dass** an dem Eingangsteil, Ausgangsteil (11, 11a) und/oder Zwischenflansch (10) zumindest ein Drehschwingungstilger angeordnet ist.

7. Hydrodynamischer Drehmomentwandler (1, 1a, 1b) nach Anspruch 6, **dadurch gekennzeichnet, dass** zumindest ein Drehschwingungstilger als Fliehkraftpendel (16, 16a, 16b, 16c) ausgebildet ist.

8. Hydrodynamischer Drehmomentwandler (1, 1a, 1b) nach Anspruch 6 oder 7, **dadurch gekennzeichnet, dass** der zumindest eine Drehschwingungstilger auf eine oder mehrere Schwingungsordnungen abgestimmt ist.

9. Hydrodynamischer Drehmomentwandler nach einem der Ansprüche 3 bis 8, **dadurch gekennzeichnet, dass** an dem Eingangsteil, Ausgangsteil und/oder Zwischenflansch zumindest ein Zusatzmassenelement angeordnet ist.

## Claims

1. A torsional vibration damper (5, 5a, 5b), in particular for a hydrodynamic torque converter (1, 1a, 1b), with damper parts rotatable about an axis of rotation (d) and rotatable relative to one another about the axis of rotation (d), namely an input part (9, 9a), an output part (11, 11a, 11b) and an intermediate flange (10, 10a) effectively arranged in the torque flow between these, wherein, between the input part (9, 9a) and the intermediate flange (10, 10a), a first spring device (12, 12a) and, between the intermediate flange (10, 10a) and the output part (11, 11a, 11b), a second spring device (14) having first and second spring elements (13, 13a, 15, 15a) arranged substantially on the same effective radius are provided, wherein the spring elements (13, 13a, 15, 15a) of at least one spring device (12, 12a, 14) are arranged preloaded in the circumferential direction in the externally unloaded state, **characterized in that** a preload is effective after exhaustion of a circumferential play.

2. The torsional vibration damper (5, 5a, 5b) according to claim 1, **characterized in that** a preload is provided by means of a preconnection of an elasticity effective in the circumferential direction in series with the spring elements (13, 13a, 15, 15a).

3. A hydrodynamic torque converter (1, 1a, 1b) at least containing the torsional vibration damper (5, 5a, 5b) according to claims 1 to 2, a converter lockup clutch (8, 8a) arranged between a converter input part and a converter output part (20), a pump wheel (6) and a turbine wheel (7, 7a).

4. The hydrodynamic torque converter (1) according to claim 3, **characterized in that** the input part (9) of the torsional vibration damper (5) is connected to the converter lockup clutch (8), the output part (11) of the torsional vibration damper (5) is connected to the converter output part, and the intermediate flange (10) is connected to the turbine wheel (7).

5. The hydrodynamic torque converter (1a, 1b) according to claim 3, **characterized in that** the input part (9a) of the torsional vibration damper (5a, 5b) is connected to the converter lockup clutch (8a) and the output part (11a, 11b) of the torsional vibration damper (5a, 5b) and the turbine wheel (7a) are connected to the converter output part.

6. The hydrodynamic torque converter (1, 1a, 1b) according to one of claims 3 to 5, **characterized in that** at least one torsional vibration absorber is arranged on the input part, output part (11, 11a) and/or intermediate flange (10).

7. The hydrodynamic torque converter (1, 1a, 1b) according to claim 6, **characterized in that** at least one torsional vibration absorber is designed as a centrifugal pendulum (16, 16a, 16b, 16c).

8. The hydrodynamic torque converter (1, 1a, 1b) according to claim 6 or 7, **characterized in that** the at least one torsional vibration absorber is tuned to one or more vibration orders.

9. The hydrodynamic torque converter according to one of claims 3 to 8, **characterized in that** at least one additional mass element is arranged on the input part, output part and/or intermediate flange.

## Revendications

1. Amortisseur de vibrations torsionnelles (5, 5a, 5b), en particulier pour un convertisseur de couple hydrodynamique (1, la, 1b), avec des parties d'amortisseur pouvant tourner autour d'un axe de rotation (d) et pouvant tourner les unes par rapport aux autres autour de l'axe de rotation (d), à savoir une partie entrée (9, 9a), une partie sortie (11, 11a, 11b) et une bride intermédiaire (10, 10a) disposée de manière active dans le flux de couple entre lesdites parties, un premier dispositif à ressort (12, 12a) étant disposé entre la partie entrée (9, 9a) et la bride intermédiaire (10, 10a) et un deuxième dispositif à ressort (14) étant disposé entre la bride intermédiaire (10, 10a) et la partie sortie (11, 11a, 11b) avec des premiers et seconds éléments à ressort (13, 13a, 15, 15a) disposés essentiellement sur le même rayon d'action, les éléments à ressort (13, 13a, 15, 15a) d'au moins un dispositif à ressort (12, 12a, 14) étant disposés à l'état non sollicités de l'extérieur de manière précontrainte dans la direction périphérique, **caractérisé en ce qu'**une précontrainte est active après épuisement d'un jeu périphérique.

2. Amortisseur de vibrations torsionnelles (5, 5a, 5b) selon la revendication 1, **caractérisé en ce qu'**une précontrainte est prévue au moyen de l'amorçage d'une élasticité agissant dans la direction périphérique en série avec les éléments de ressort (13, 13a, 15, 15a).

3. Convertisseur de couple hydrodynamique (1, la, 1b) comprenant au moins l'amortisseur de vibrations torsionnelles (5, 5a, 5b) selon les revendications 1 à 2, un embrayage de pontage de convertisseur (8, 8a) disposé entre une partie entrée de convertisseur et une partie sortie de convertisseur (20), une roue de pompe (6) et une roue de turbine (7, 7a).

4. Convertisseur de couple hydrodynamique (1) selon la revendication 3, **caractérisé en ce que** la partie entrée (9) de l'amortisseur de vibrations torsionnelles (5) est reliée à l'embrayage de pontage du convertisseur (8), la partie sortie (11) de l'amortisseur de vibrations torsionnelles (5) est reliée à la partie sortie du convertisseur et la bride intermédiaire (10) est reliée à la roue de turbine (7).

5. Convertisseur de couple hydrodynamique (la, 1b) selon la revendication 3, **caractérisé en ce que** la partie entrée (9a) de l'amortisseur de vibrations torsionnelles (5a, 5b) est reliée à l'embrayage de pontage du convertisseur (8a) et la partie sortie (11a, 11b) de l'amortisseur de vibrations torsionnelles (5a, 5b) et la roue de turbine (7a) sont reliées à la partie de sortie du convertisseur.

6. Convertisseur de couple hydrodynamique (1, la, 1b) selon l'une quelconque des revendications 3 à 5, **caractérisé en ce qu'**au moins un amortisseur de vibrations torsionnelles est disposé sur la partie entrée, la partie sortie (11, 11a) et/ou la bride intermédiaire (10).

7. Convertisseur de couple hydrodynamique (1, la, 1b) selon la revendication 6, **caractérisé en ce qu'**au moins un amortisseur de vibrations torsionnelles est conçu comme un pendule centrifuge (16, 16a, 16b, 16c).

8. Convertisseur de couple hydrodynamique (1, la, 1b) selon la revendication 6 ou 7, **caractérisé en ce que** l'au moins un amortisseur de vibrations torsionnelles est accordé sur un ou plusieurs ordres de vibrations.

9. Convertisseur de couple hydrodynamique selon l'une quelconque des revendications 3 à 8, **caractérisé en ce qu'**au moins un élément de masse supplémentaire est disposé sur la partie entrée, la partie sortie et/ou la bride intermédiaire.
